# EUROPEAN PATENT APPLICATION

(11) **EP 0 814 257 A2**
(43) Date of publication of application: **29.12.1997**
(21) Application number: 97109860.3
(22) Date of filing: 17.06.1997
(51) Int. Cl.: F02M 65/00

(54) **A method and equipment for carrying out tests on a heat engine when cold and an engine designed to be tested by this method**

(30) Priority: 18.06.1996 IT TO960525
(71) Applicant: Simpro S.p.A., 10032 Brandizzo (IT)
(72) Inventor: Longoni, Angelo, 20050 Verano Brianza (IT)
(74) Representative: Jorio, Paolo

(57) **Abstract**

A heat engine, in particular a diesel engine, with an injection circuit which includes a high-pressure pump, at least one electrically operated injector and an electronic central control unit; furthermore, the injection system includes: an external connector, possibly with a quick-release coupling, arranged downstream of, and in a branch from, the electric pump, for the introduction of pressurised fluids into the circuit , the connector having sealing means preferably including a first automatic closure valve; and a second automatic valve arranged on the delivery side of the electric pump as a non-return valve; the cold-testing equipment includes a first station with a sleeve for connection to the connector, adapted to open the first automatic valve, with means for supplying a pressurised gas through the sleeve and means for monitoring the fluid-dynamic properties of the gas; a second station coinciding with that at which the cold testing is carried out, having a motor for rotating the heat engine and a circuit for supplying fuel to the electric pump, complete with a recycling duct for returning fuel to the supply circuit, this recycling duct being connectable to the connector and operable to maintain the first valve open; and a third station similar to the first but in which only pressurised fuel is supplied through the sleeve, for high-pressure testing to be carried out.

## Description

The present invention relates to a method and equipment for carrying out tests on a heat engine, in particular a diesel engine, when cold. The invention also relates to a heat engine modified so as to be adapted to be tested when cold by the method of the invention.

In the prior art, in order to test heat engines when they leave the production line, or on the line itself, they are mounted on engine test beds equipped with special circuits for supplying fuel to the engine; once electrical, mechanical and hydraulic connections have been made, with the assistance of automated systems, the engine is started and allowed to run for a few minutes. However, this testing method is costly, time-consuming and requires special insulated chambers where the tests are carried out, the engines having to be removed from the production line and taken to the chambers on pallets designed to be secured rapidly to the test bed and then removed therefrom. For this reason, whenever possible, the test described, known as a "hot test" is carried out, only on samples.

A so-called "cold test" is also known in which the engine is connected mechanically to an electric motor which rotates the drive shaft of the heat engine to be tested, thereby actuating the pistons and the distribution system of the engine (induction and exhaust valves, cam shafts etc.) This test thus allows the monitoring of functions such as the timing, sealing of the valves, induction and exhaust gas flow rates etc. by means of suitable sensors arranged for this purpose on the engine. Thanks to the sensors currently available and to technology for the electronic processing of signals and data, the "cold" system drastically reduces the time and cost of engine testing, enabling every engine manufactured to be tested on the production line itself.

However, the trend in the motor vehicle industry is to produce engines with electronic-injection fuel supply systems: virtually all current petrol engines are thus equipped and all diesel engines probably will be in the near future. In such injection systems, the fuel is pressurised to the injection pressure by a pump (which in the case of diesel engines is driven mechanically by the engine itself while, in petrol engines, it is normally electrically operated) and then fed to the cylinders by electrically operated injectors which are simply special solenoid valves, the opening and closing of which (which thus establishes the injection timing) is controlled by an electronic control unit. In order to prevent the injection pump from operating when dry, it is necessary to ensure that fuel or an equivalent fluid is passed through it during cold tests. However, when test times have not been calculated accurately, there is a risk that fuel (or the liquid replacing it) could seep through the closed injectors, into the cylinders. If fuel (or another flammable liquid) is being used, this leads, in diesel enquires, to a serious risk of the engine starting accidentally; on the other hand, if a non-combustible liquid is used this could contaminate the cylinders or, more seriously, damage the engine by accidentally allowing into the cylinders a volume of liquid greater than the volume of the combustion chambers when the pistons are at top dead centre.

Finally, during the tests that must be carried out on engines on the production line, there is currently an additional risk of fuel leaks from the engines, for example through badly tightened connections, both during the "cold" test just described and during testing of seals at high pressure, which is carried out with the express purpose of identifying any leakage from the injection system which would constitute an extremely dangerous fire hazard when the engine was in use.

The object of the invention is to overcome the disadvantages described in connection with production-line testing of heat engines, particularly diesel engines. In particular, one object of the invention is to provide a method of testing which makes it possible to carry out "cold-testing" both to check the correct operation of an engine and the proper hydraulic sealing of the injection system without risk of damage. Another object of the invention is to provide equipment for carrying out the method, arranged at stations along the production line so that the engines can be tested more conveniently and faster. Finally, it is also an object of the invention to provide a heat engine designed to be tested by the aforesaid method.

Accordingly the invention provides a heat engine, in particular a diesel engine, having an injection circuit including in turn a high-pressure pump, at least one electrically-operated injector and an electronic central control unit; characterised in that the injection circuit also includes: an external connector arranged downstream of the pump for allowing pressurised fluids to be introduced into and to leave the circuit, equipped with sealing means; and a first automatic unidirectional valve arranged as a non-return valve on the delivery side of the pump in the event of the pump-regulation valve assembly not providing a unidirectional seal.

In particular, the means for sealing the connector include a second automatic unidirectional valve adapted to be closed by the pressure within the injection circuit and to be opened by an external pressure directed, through the said connector, to the injection circuit. In addition, the connector is formed in an easily accessible position on the outside of an injection manifold of the injection circuit, to which one or more injectors are directly connected.

Thus, in accordance with the method of the invention, it is easy to cold-test an engine without risk of causing untoward fuel leaks or damage to the engine or the injection pump, and without the risk of causing accidental ignition by effecting:
- a first test of the hydraulic sealing of the injection circuit of the engine by introducing a pressurised gas into the injection circuit, downstream of the injection pump, and then monitoring one or more fluid-dynamic properties of the gas introduced into the injection circuit;
- a connection of the engine being tested to a motor which can rotate the engine being tested without starting it, as is typical in cold testing, and simultaneously supplying fuel to the injection circuit through the injection pump and withdrawing it from the injection circuit by means of a recycling duct connected with a fluid-tight seal to the injection system, downstream of the injection pump, preferably while the injectors are disconnected from the electronic central control unit of the engine being tested; and
- a second test of the hydraulic sealing of the injection circuit by introducing pressurised fuel into it downstream of the injection pump and monitoring one or more fluid-dynamic properties of the fuel introduced into the injection system.

Finally, the invention also relates to equipment for the cold-testing of a heat engine, in particular a diesel engine, the engine being of the type described above and the equipment being characterised in that it includes at least one of the following stations:
- a first station having a sleeve for fluid-tight connection to the said connector, means for supplying a pressurised gas to the sleeve and means for monitoring the fluid-dynamic properties of the gas;
- a second station having a motor for rotating the heat engine without starting it, for carrying out typical cold tests, and a circuit for supplying fuel to the said injection pump including a duct for recycling fuel to the supply circuit, the recycling duct being connectable with a fluid-tight seal to the said connector;
- a third station having a sleeve for fluid-tight connection to the said connector, means for supplying pressurised fuel through the sleeve, and means for monitoring the fluid-dynamic properties of the said pressurised fuel.

Further characteristics and advantages of the present invention will become clear from the description which follows of one non-limitative embodiment, described purely by way of example, with reference to the appended drawings, in which:
Figure 1 is a schematic illustration of a heat engine (showing schematically the fuel injection system) according to the invention; and
Figures 2 to 4 illustrate schematically three steps in the method of testing of the invention, carried out on the engine of Figure 1 at three stations of the test equipment of the invention.

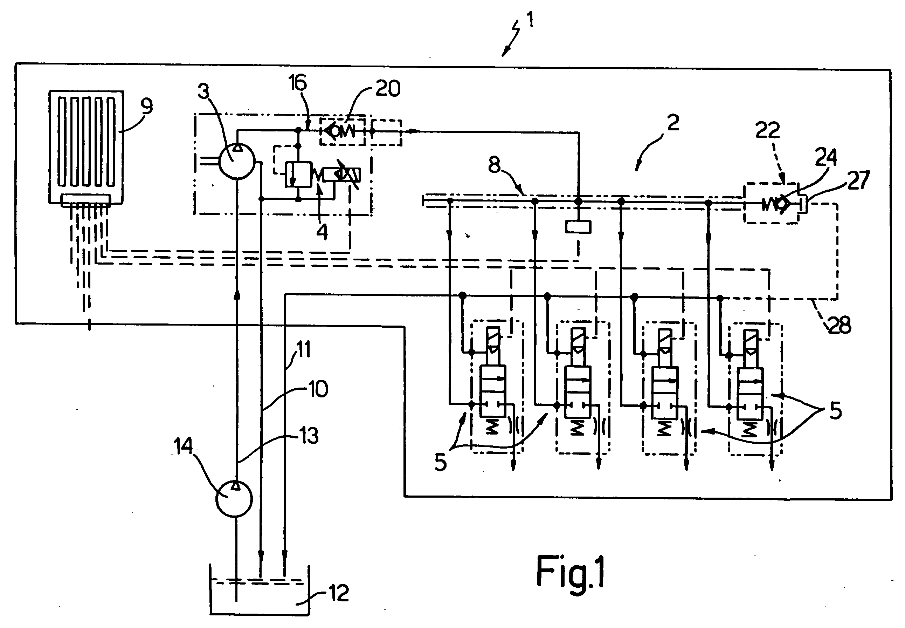

With reference to Figures 1 to 4, a heat engine is indicated 1, in particular a diesel engine (which will be referred to specifically hereafter without thereby restricting the generality of the invention) made in accordance with the invention and illustrated in Figure 1 under normal operating conditions in a vehicle; the engine 1, represented schematically by a continuous-line block, has an injection circuit 2, illustrated schematically inside the block representing the engine 1, including a known injection pump 3 coupled to a pressure-regulating solenoid valve 4, also known, and to one or more electrically-operated injectors 5 (generally one for each cylinder of the engine 1) each connected so as to branch directly from a hollow tubular element 8, constituting the injection manifold, arranged downstream of the pump 3 and of the associated regulating valve 4 and immediately upstream of the injectors 5.

The circuit 2 also includes an electronic central control unit 9 for controlling the injectors 5, the solenoid valve 4 and the pump 3 itself, a fuel recycling duct 10 and a drainage duct or manifold 11, which are both connected in use to the inside of a fuel tank 12 having a fuel supply duct 13 and an associated pump 14, forming part of the vehicle. In use, the pump 14 withdraws a larger quantity of fuel from the tank 12 than that required by the engine 1 and delivers it, at low pressure (1-2 bar), to the pump 3 through the duct 13; the pump 3 pressurises the fuel flow to the injection pressure (generally very high) and pumps it to a delivery 16 (Figure 1) connected to the valve 4: the latter allows any excess fuel to be recycled to the tank 12 through the duct 10 while the remainder is conveyed to the manifold 8 from which it reaches the injectors 5; these are normally-closed solenoid valves and the timing of their opening is controlled by the control unit 9 which opens the injectors 5 one at a time, in phase with the engine 1, so as to inject the fuel into the cylinders (not illustrated) of the engine 1, while the (negligible) portion of fuel which leaks through the injectors 5 is collected in the drainage duct 11 which returns it to the tank 12.

According to the invention, in the event of the pump-regulating valve assembly failing to provide a unidirectional seal, the pump 3 and valve assembly 4 must have an automatic unidirectional valve 20 (in itself known, for example of the type using a spring-loaded ball) in the delivery line 16 from the pump 3 as a non-return valve, that is so as to be openable by the pressure generated by the pump 3 to allow fuel to flow to the manifold 8, but operable to prevent (except for possible minimal seepage at the site of the seal) any reverse flow and therefore any passage of fluid from the manifold 8 towards the pump 3 and the valve 4. The assembly comprising the pump 3 and the valve 4 can either be provided ready-fitted with the valve 20 (as schematically illustrated in Figure 1, in which the valve 20, pump 3 and valve 4 are enclosed in a single rectangle in chain-line), or this can be fitted later to the delivery 16, directly on the outside of the body of the pump 3, in a well known arrangement for non-return valves, as schematically illustrated in broken outline in Figure 1.

Also in accordance with the invention, the circuit 2 has a further characteristic which differentiates it from all prior-art injection systems, that is, that it includes an outer connector 22 (shown schematically as a rectangle in broken outline), preferably of any known rapid-connection type, arranged downstream of the pump 3 and operable to enable pressurised fluids, taken from the pump 3 itself, to be introduced from the outside into (or discharged out of) the circuit 2. In particular, the connector 22 may be equipped with seal means including a second automatic unidirectional valve 24, schematically shown as a valve with a spring-loaded ball, of a type similar to the valve 20, arranged to be closed by the pressure within the injection circuit 2 (concordant with that applied by the spring) and to be opened by an external pressure directed through the connector towards the injection circuit 2, for example an hydraulic pressure, or mechanical pressure applied by a special tool, for example a rod, against the ball constituting the shutter of the valve 24, in itself well known.

Again, in accordance with the invention, the seal means are completed by a cap 27 (Figure 1) adapted to form a fluid-tight seal with the connector 22 or by a drainage tube 28 (indicated schematically by a broken line in Figure 1) sealed at one end to the connector 22 and at the other end to the drainage duct 11 for the electrically-operated injectors 5 of the injection circuit 2, through which, in use, any negligible seepage of fuel through the valve 24 can be returned to the tank 12.

The connector 22 is preferably formed in an easily accessible position on the outside of the injection manifold 8 of the injection circuit 2 and the position of this connector 22 on the manifold 8 is chosen so as to cause as much air as possible to be evacuated from the circuit 2 through the connector 22 after fuel has been introduced into the manifold 8 by the injection pump 3, with the injection circuit initially empty (and thus full only of air before filling) and with the connector 22 open ( or equipped, as will be explained, to hold the valve 24 open). The arrangement of the connector 22 at one end of the manifold 8, as shown in the appended drawings, must thus be seen as in no way limitative.

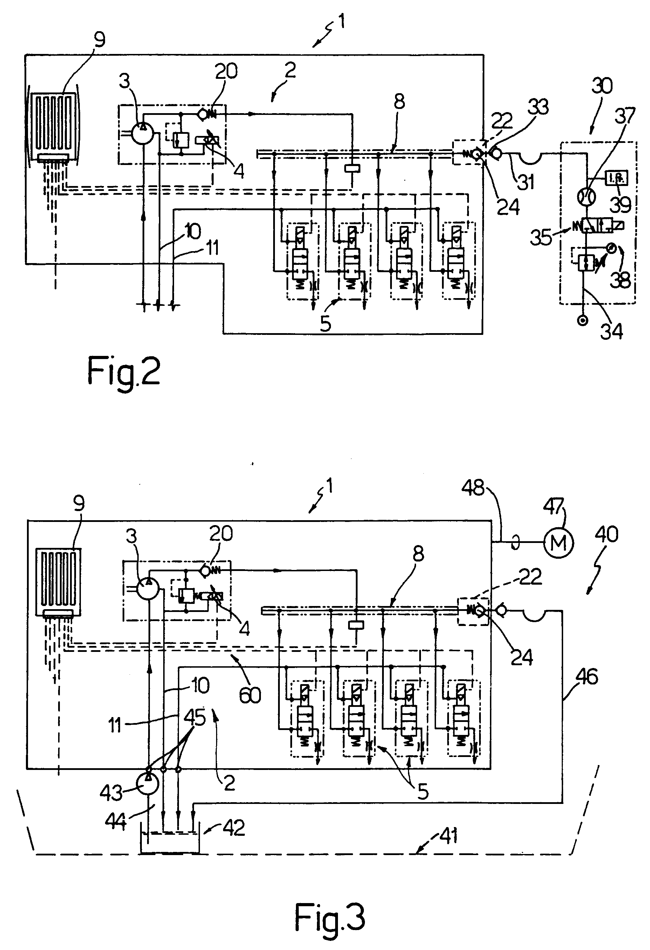

In order to test the hydraulic sealing of all components of the injection circuit 2 without risking unexpected escapes of fuel from the engine 1, and/or to allow tests to be carried out on a cold engine 1 with the engine driven by an electric motor, test equipment is used which includes at least one or, in the preferred embodiment of the invention, all three stations illustrated schematically in Figures 2, 3 and 4.

With reference to Figure 2, the aforesaid test equipment according to the invention includes a first seal-testing station 30 which includes, purely by way of non-limitative example, the following items: a sleeve 31 for fluid-tight connection to the connector 22, means for supplying pressurised gas (for example compressed air) through the sleeve 31 and means for measuring the fluid-dynamic properties of the aforesaid gas; in the case under consideration, the sleeve 31 is flexible and of any known type, for example a quick-release type, suitable for coupling with the connector 22; it is also equipped with a projecting rod 33 which can press against, and open, the valve 24, if present, when the sleeve 31 is fitted to the connector 22. The aforesaid means for supplying pressurised gas are constituted by a pipe 34 connected to a source of compressed air and an associated valve 35; instruments such as a flow rate meter 37 and/or pressure gauges 38, 39 are arranged either along the pipe or branching off it.

Figure 3, on the other hand, illustrates a second station 40 which is a generic station of known type for the cold-testing of an engine which is driven to rotate, the drawing showing schematically a support structure 41 for the engine 1 and other accessories of the station; the station 40 includes a tank 42 full of fuel, in this case diesel oil, a pump 43 with an associated supply tube 44 and quick-release connections 45 for connecting the pipes 10, 11 to the tank 42 and the tube 44 to the pump 3, a flexible sleeve 46 for fluid-tight connector to the connector 22, constituting a recycle duct to the tank 42, and a known electric motor 47 connected in known manner to the drive shaft 48 of the engine 1 for rotating this latter without starting it; in this way, the motor 47 can rotate the heat engine 1 without necessarily causing ignition, while the pump 43 with the tube 44 and the sleeve 46 constitute a circuit for supplying fuel to the pump 3 and recycling it to the tank 42 through the sleeve 46; to this end, the latter has an attachment compatible with the connector 22 and has a rod (not illustrated) or other automatic mechanical means for exerting pressure against, and opening, the valve 24, if present.

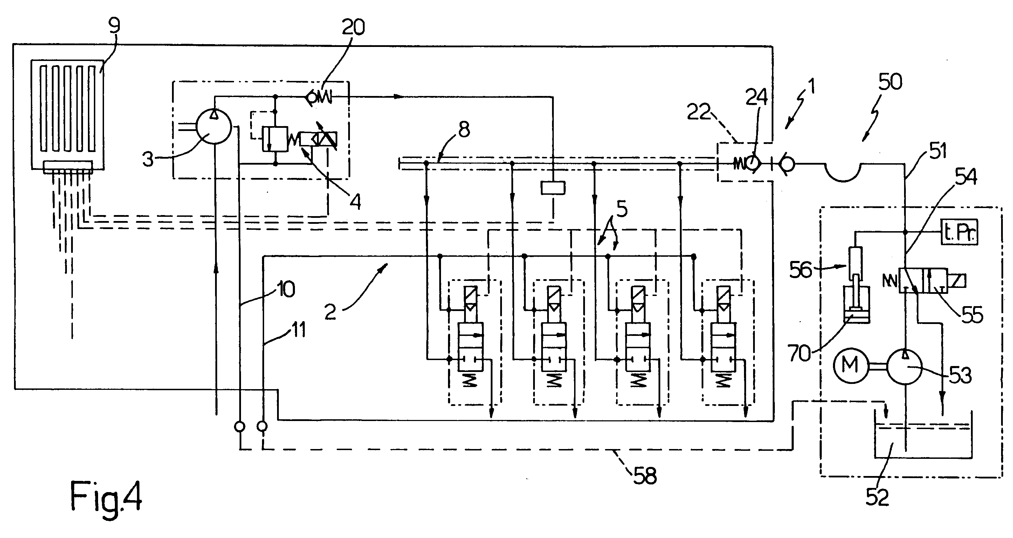

Finally, Figure 4 shows a third seal-testing station 50, of similar design to the station 30 and including, by way of non-limitative example, the following equipment; a sleeve 51 for fluid-tight sealing to the connector 22, means for supplying pressurised fuel through the sleeve 51 to the manifold 8 and means for measuring fluid-dynamic properties of the said pressurised fuel; in the case under consideration, the latter are constituted by a fuel tank 52 for the diesel oil, with a pump 53 and a supply tube 54 connected in series with the sleeve 51 through a control valve 55, and a (known) micrometric flow-rate meter 56 of the hydraulic plunger type, or by known pressure transmitters, not shown for the sake of simplicity; the station 50 finally also includes drainage means 58 for recycling to the tank 52, equipped with fluid-tight connections to the tubes 10, 11 of the circuit 2. In this case, again, the sleeve 51 has rod means (or equivalent), not shown, for automatically opening the valve 24 (if present) of the connector 22 when the latter is connected to the sleeve 51, with a fluid-tight seal.

For preference, the three stations 30, 40, 50 constituting the complete plant according to the invention are arranged along a production line for the engine 1 (which is known and not shown for the sake of simplicity) and are equipped with connectors and instruments enabling them to operate at the same rate as the production line, in the manner now described.

According to the invention, once the diesel oil circuit has been fitted to the engine 1 on the production line, even if the engine is still missing other components (for example the central control unit 9 illustrated in brackets in Figure 2), a first hydraulic sealing test is carried out on the injection circuit 2 at the first station 30, this test being carried out with the use of a gas (for example air) which, once pressurised to a known value, is supplied through the aperture of the valve 35 into the circuit 2 until this reaches the same value; at this point, if there is any leakage in the system 2 due, for example, to faulty tightening of the connections to the injectors 5 (the most common cause), it will be necessary to continue to deliver pressurised air in order to maintain pressure in the circuit 2, the flow rate being proportional to the leak detected.

Equally, it is possible to stop supplying pressurised air, the valve 35 being closed and the magnitude of any leak being measured, for example, by examining the curve of the pressure drop in time downstream of the valve 35 by means of the pressure transmitters 38, 39 (by differential measurement, for example). In either case, even fairly small leaks will be detected, bearing in mind that the smallest leak detectable will be just greater than the naturally occurring leakage in the circuit 2 which, being a hydraulic circuit, will undoubtedly allow leakage of a minimal quantity of a gas through the valve 20 and the injectors 5. More specifically, any faulty tightening of the injector connections would produce a very significant loss of air, which would certainly be detected, making it possible to carry out any adjustments immediately (since the engine 1 is still on the production line).

The engine 1 then moves on to the second station 40 (Figure 3), the cold-testing station, where it is connected to the motor 47 and the pump 43; in addition, during this step a series of sensors , known and not shown for the sake of simplicity, is also connected to the engine 1 (for example, for monitoring the air flow through the induction and exhaust manifolds, the opening of the induction and exhaust valves of the engine, the angle of the drive shaft 48 and of the corresponding cam shafts (not shown) etc); once the motor 47 is started, the pump 42 is also activated and the central control unit 9 is set to operate the valve 4-pump 3 assembly at a desired, predetermined rate: to this end, for example, the control unit of the engine could be disconnected and replaced by a similar, preprogrammed control unit (not shown), forming part of the station 40. The fuel is drawn from the tank 42, and passes through the pump 3 (preventing this from running dry) to the manifold 8 from which it expels any air through the connector 22 (held open by the connection with the sleeve 46), before returning to the tank 42 through the valve 24 (open if present) and the sleeve 46: in this way the fuel cannot build up an excessive pressure in the circuit 2, The engine 1 can thus be made to run empty, with no combustion occurring, simply being driven by the motor 47 for as long as is required to test the timing and carry out all other tests required in cold testing, without running any risk of accidental ignition of the engine 1 as a result of the introduction of fuel into the cylinders by any leakage past the injectors 5 nor any risk of loss of diesel oil through the injector connections, thanks to the previous test. If the control unit 9 of the engine is used during this step, it is preferably disconnected from the injectors, as indicated at 60 in Figure 3.

Finally, with reference also to Figure 4, the engine 1 is removed from the second station 40 and transferred to the third station 50 where a second hydraulic seal test is carried out, but this time at high pressure (even 1,500 bar) and with diesel oil; the latter is pressurised by the pump 53 and supplied to the manifold 8 through the sleeve 51 and the connector 22: once the test pressure has been achieved in a desired manner (for example in incremental steps), the valve 55 is closed so as to cut the fuel flow and isolate the circuit 2; any leaks (apart from natural leaks - losses - from the circuit 2 which are detectable experimentally or statistically and tabulated as parameters typical of each type of engine tested) will cause a drop in pressure in the circuit 2 and in the associated branch tube 54 downstream of the valve 55 which will cause the progressive movement of a piston or plunger 70 of the hydraulic-plunger flow meter 56: by virtue of the hydraulic press principle (difference in section between the piston in contact with the diesel oil side, which is smaller, and the measuring piston 70, the movement of which may be monitored by suitable instrumentation in known manner) it is possible to detect even minimal loses, of the order of a few cubic millimetres, any larger leaks having been detected in any case in the sealing test carried out at the first station 30. Once all the tests have been completed and the engine 1 fully assembled, it is mounted in a vehicle where it will be in the condition shown in Figure 1, with the unused connector 22, closed by the cap 27 (or connected to the drainage duct 28, in which case it would be closed by the valve 24); as is not the case for prior art engines, the engine 1 will have been tested to a high standard and much of the injection circuit 2 will be full of diesel oil, thereby enormously facilitating and speeding up the first starting of the engine, and enhancing the life of the engine 1.

## Claims

1. A heat engine, in particular a diesel engine, having an injection circuit including in turn a high-pressure pump, at least one electrically-operated injector and an electronic central control unit; characterised in that the injection circuit also includes: an external connector arranged in a branch downstream of the pump for allowing pressurised fluids to be introduced into and to leave the circuit, equipped with sealing means; and a first automatic unidirectional valve arranged as a non-return valve on the delivery side of the pump.

2. A-heat engine according to Claim 1, characterised in that said means for sealing the connector include a second automatic unidirectional valve closable by the pressure within the injection circuit and openable by an external pressure directed through the connector into the injection circuit.

3. A heat engine according to either Claim 1 or Claim 2, characterised in that the said connector is formed in an easily accessible external position, on an injection manifold of the said injection circuit, to which one or more electrically operated injectors are connected directly.

4. A heat engine according to Claim 3, characterised in that the position of the said connector on the said injection manifold is chosen so as to ensure that when fuel is pumped into the manifold by the injection pump when the injection circuit is empty and the connector is open, the maximum possible quantity of air is evacuated from the injection circuit through the said connector.

5. A heat engine according to any one of the preceding Claims, characterised in that the said means for sealing the connector include a cap, or a drainage duct connected at one end with a fluid-tight seal, to the connector and, at the other, to a drainage pipe for the said at least one electrically-operated injector of the said injection circuit.

6. Equipment for testing a heat engine when cold, in particular a diesel engine, the engine having an injection circuit fitted with a pump and, downstream thereof and upstream of at least one electrically operated injector of the circuit, with a connector for connecting the inside of the injection circuit to external hydraulic circuits; the equipment being characterised in that it includes at least one of the following stations:
- a first station with a sleeve for connection with a fluid-tight seal to the said connector, with means for supplying a pressurised gas to the sleeve and with means for monitoring the fluid-dynamic properties of the gas;
- a second station with a motor for driving the said heat engine to rotate without starting it, for monitoring operating parameters typically considered in cold testing, and a circuit for supplying fuel to the injection pump, including a recycle duct for returning fuel to the supply circuit, this recycle duct being connectible with a fluid-tight seal to the said connector;
- a third station with a sleeve connectible with a fluid-tight seal to the said connector, with means for supplying pressurised fuel through the sleeve and means for measuring the fluid-dynamic properties of the said pressurised fuel.

7. Equipment according to Claim 6, characterised in that it includes the three stations simultaneously, arranged along a production line for the said engine, towards the end of this line.

8. Equipment according to either Claim 6 or Claim 7, characterised in that the said attachment and recycle sleeves of the said stations, for fluid-tight connection to the said connector of the injection circuit of the engine, have mechanical means for applying pressure to, and opening, any unidirectional safety valve fitted to the said connector.

9. Equipment according to any one of Claims from 6 to 8, characterised in that the said sleeves have quick-release hydraulic connections adapted to cooperate with a corresponding coupling of the connector.

10. A method of testing a heat engine when cold, which can be carried out on the production line for the engine, characterised in that it includes the following steps:
- carrying out a first test of the hydraulic sealing of the injection circuit of the engine, by introducing a pressurised gas into the injection circuit, downstream of an injection pump forming part of the injection circuit of the engine, and then monitoring one or more fluid-dynamic properties of the gas introduced into the system;
- connecting the engine being tested to an external motor and rotating the engine being tested without starting it in order to monitor operating parameters characteristic of cold testing by supplying fuel to the injection circuit through the injection pump and withdrawing it from the circuit by means of a recycle duct hydraulically sealed to the injection system downstream of the injection pump, the injectors preferably remaining disconnected from the central control unit of the engine being tested.
- carrying out a second hydraulic test of the hydraulic sealing of the injection circuit, this time by introducing pressurised fuel into it, downstream of the injection pump, and then monitoring one or more fluid-dynamic properties of the fuel introduced into the injection circuit.
